# EUROPEAN PATENT APPLICATION

(11) **EP 4 632 244 A1**
(43) Date of publication of application: **15.10.2025**
(21) Application number: 23900427.8
(22) Date of filing: 16.11.2023
(51) Int. Cl.: F16D 3/20, B23P 21/00, F16D 3/2245

(54) **AUTOMATIC BALL INCORPORATION METHOD FOR CONSTANT-VELOCITY UNIVERSAL JOINT**

(30) Priority: 08.12.2022 JP 2022196340
(71) Applicant: NTN Corporation, Osaka-shi Osaka 530-0005 (JP)
(72) Inventor: TANIGUCHI, Takuya, Iwata-shi Shizuoka 438-8510 (JP)
(74) Representative: Grünecker Patent- und Rechtsanwälte PartG mbB
(86) International application number: PCT/JP2023/041329
(87) International publication number: WO 2024/122306

(57) **Abstract**

Provided is an automatic ball incorporation method for a constant velocity universal joint (1, 201), the automatic ball incorporation method including: fitting an inner combination body (I), which is formed by fitting a spherical outer peripheral surface (8, 208) of an inner joint member (3, 203) to a spherical inner peripheral surface (13, 213) of a cage (5, 205), to a spherical inner peripheral surface (6, 206) of an outer joint member (2, 202), and arranging the cage (5, 205), the inner joint member (3, 203), and the outer joint member (2, 202) under a state in which axes of the cage (5, 205), the inner joint member (3, 203), and the outer joint member (2, 202) are substantially matched with each other; inclining the axis of the inner joint member (3, 203) with respect to the axis of the outer joint member (2, 202) by an inclination lever (61), and incorporating one of balls (4, 204) into one of pockets (5a, 205a) of the cage (5, 205), the one pocket (5a, 205a) being exposed on an opening end portion of the outer joint member (2, 202); and pushing the cage (5, 205) by a cage pushing mechanism (65) when the inclination of the axis of the inner joint member (3, 203) is reset by the inclination lever (61) so as to subsequently incorporate another one of the balls (4, 204) into another one of the pockets (5a, 205a) of the cage (5, 205).

## Description

### TECHNICAL FIELD

This invention relates to an automatic ball incorporation method for a constant velocity universal joint.

### BACKGROUND ART

This invention relates to an automatic ball incorporation method for a constant velocity universal joint including an outer joint member, an inner joint member, a plurality of balls, and a cage. The outer joint member has a spherical inner peripheral surface in which a plurality of track grooves are formed so as to extend in an axial direction. The outer joint member has an opening side and an inner side, which are spaced apart from each other in the axial direction. The inner joint member has a spherical outer peripheral surface in which a plurality of track grooves are formed so as to extend in the axial direction. The plurality of balls are each arranged between the track groove of the outer joint member and a corresponding one of the track grooves of the inner joint member, and transmit torque. The cage has pockets accommodating the balls. The cage has a spherical outer peripheral surface and a spherical inner peripheral surface that are in sliding contact with the spherical inner peripheral surface of the outer joint member and the spherical outer peripheral surface of the inner joint member, respectively.

As one example of the above-mentioned kind of constant velocity universal joint, the following constant velocity universal joint exists. The track grooves of the outer joint member and the track grooves of the inner joint member each have an arc-like ball raceway center line having a curvature center without being offset in the axial direction with respect to a joint center. A plane containing the ball raceway center line and the joint center is inclined in a circumferential direction with respect to an axis of the joint, and an inclination direction of the plane is set opposite for the track grooves of the outer joint member to that for the track grooves of the inner joint member. The constant velocity universal joint in which the inclination direction of the track grooves of the outer joint member and the inclination direction of the track grooves of the inner joint member are alternately set opposite to each other in the circumferential direction has less torque loss and heat generation, and hence can achieve higher efficiency.

As a related-art assembly method, an automatic assembly method for a Rzeppa type constant velocity universal joint using six balls is described in Patent Document 1. This automatic assembly method includes a reference ball insertion step, an inner combination body incorporation step, and a ball incorporation step. Specifically, in the reference ball insertion step, track grooves of an inner ring and pockets of a cage are aligned with each other for an inner combination body formed by externally fitting the cage over the inner ring. Then, a reference ball is inserted into one of the pockets. Next, in the inner combination body incorporation step, the pockets formed at positions on both sides of an axis of the cage are aligned with protruding portions at opposed positions, which are formed between track grooves of an outer ring, under a state in which the reference ball in one pocket is positioned on an outer side of the outer ring. The inner combination body is fitted and inserted inside the outer ring and is incorporated thereinto so that their axes are orthogonal to each other. Then, after the inner combination body is rotated by a given angle in a circumferential direction of the outer ring, the inner combination body is inclined inside the outer ring so as to be brought into a state of being coaxial with the outer ring. In this manner, the reference ball is fitted into one of the track grooves defined by a pair of the inner ring and the outer ring.

Then, in the ball incorporation step, the inner combination body is tilted with respect to the outer ring under a state in which the reference ball is kept fitted in the track groove. In this manner, the pocket having a positional relationship of 120° in a phase direction with respect to the reference ball is exposed from an opening end portion of the outer ring, and a ball is inserted into the exposed pocket. After that, the inner combination body is returned to its initial position, and the ball is fitted into a corresponding one of the track grooves of the outer ring. Balls are inserted in order into the remaining pockets while the inner combination body is tilted for each time. The above-mentioned automatic assembly method has been proposed.

### PRIOR ART DOCUMENTS

### PATENT DOCUMENTS

Patent Document 1: JP 62-37519 A

### SUMMARY OF THE INVENTION

### PROBLEMS TO BE SOLVED BY THE INVENTION

Patent Document 1 principally describes the assembly of a Rzeppa type constant velocity universal joint using six balls, in which the track grooves of the inner joint member and the track grooves of the outer joint member are not inclined in the circumferential direction and the plane containing the ball raceway center line of the track groove and the joint center extends in the same direction as that of the axis of the joint. Hence, when the inner combination body including the cage and the inner joint member is returned to its initial position so that the ball is fitted into a corresponding one of the track grooves of the outer ring after the ball is inserted into the pocket of the cage, the inner combination body is relatively smoothly tilted to thereby enable the automatic assembly of the constant velocity universal joint.

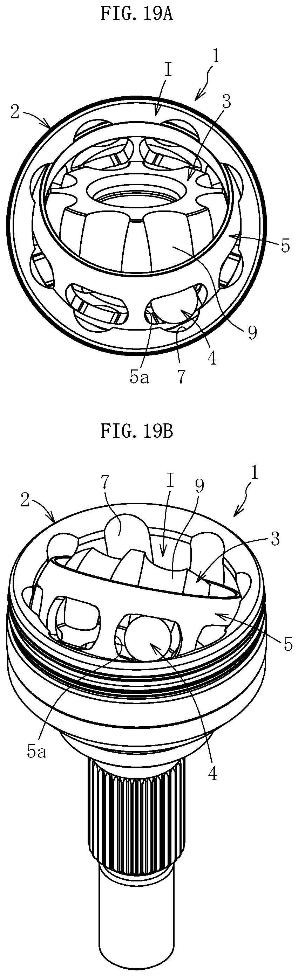

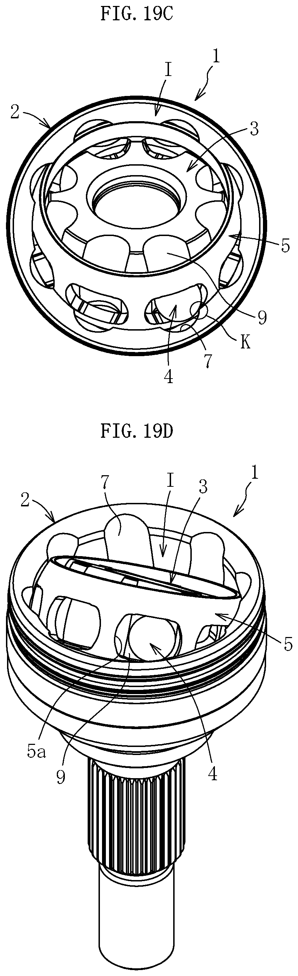

In a case of a cross track groove type constant velocity universal joint in which the plane containing the ball raceway center line of the track groove and the joint center is inclined in the circumferential direction with respect to the axis of the joint, a problem has been found in that the following trouble may occur in the incorporation of balls. This problem is described with reference to FIGS. 19. FIG. 19A and FIG. 19C are perspective views when viewed from a plan-view direction, and FIG. 19B and FIG. 19D are perspective views when viewed from a front-view direction.

As illustrated in FIG. 19A and FIG. 19B, a ball 4 is inserted into a pocket 5a of a cage 5. After the insertion of the ball 4, the inclination of an inner combination body I including an inner joint member 3 and the cage 5 is intended to be reset, only the inner joint member 3 is tilted while the cage 5 remains inclined as illustrated in FIG. 19C and FIG. 19D. The ball 4 is pushed by a shoulder portion of a track groove 9 of the inner joint member 3, and hence a phase of the ball 4 is shifted. As a result, as illustrated in FIG. 19C, the ball 4 and a shoulder portion K of a track groove 7 of an outer joint member 2 interfere with each other. Thus, the ball 4 is prevented from being moved into the track groove 7 of the outer joint member 2 and bites thereinto. Then, the inner combination body I is not returned to a horizontal state. As a result, a problem has been found in the occurrence of trouble in the ball incorporation at the time of the automatic ball incorporation in the cross track groove type constant velocity universal joint 1.

Further, although not shown, in a case in which a Rzeppa type constant velocity universal joint has inner specifications including, for example, a track offset amount reduced in order to achieve reduction in weight and size, problems have also been found in that the same trouble in the ball incorporation occurs and stable tilting of the inner combination body is not achieved.

In view of the problems as described above, the present invention has an object to provide an automatic ball incorporation method for a constant velocity universal joint, which enables automatic incorporation of balls regardless of a track groove type of a constant velocity universal joint, such as a cross track groove type, or regardless of internal specifications of a Rzeppa type constant velocity universal joint or the like.

### SOLUTIONS TO THE PROBLEMS

As a result of various examinations conducted in order to achieve the above-mentioned object, the inventors of the present invention have achieved the present invention based on the conception that a cage pushing mechanism is operated simultaneously with an inclination reset operation of an inclination lever when inclination of an inner combination body including some balls incorporated therein is reset.

As a technical measure for achieving the above-mentioned object, according to the present invention, there is provided an automatic ball incorporation method for a constant velocity universal joint, the constant velocity universal joint comprising: an outer joint member having a spherical inner peripheral surface in which a plurality of track grooves extending in an axial direction are formed, the outer joint member having an opening side and an inner side that are spaced apart from each other in the axial direction; an inner joint member having a spherical outer peripheral surface in which a plurality of track grooves extending in the axial direction are formed; a plurality of balls configured to transmit torque and arranged between the track grooves of the outer joint member and the corresponding track grooves of the inner joint member; and a cage having pockets configured to accommodate the balls, the cage having a spherical outer peripheral surface and a spherical inner peripheral surface that are allowed to be in sliding contact with the spherical inner peripheral surface of the outer joint member and the spherical outer peripheral surface of the inner joint member, respectively, the automatic ball incorporation method comprising: fitting an inner combination body, which is formed by fitting the spherical outer peripheral surface of the inner joint member to the spherical inner peripheral surface of the cage, to the spherical inner peripheral surface of the outer joint member, and arranging the cage, the inner joint member, and the outer joint member under a state in which axes of the cage, the inner joint member, and the outer joint member are substantially matched with each other; inclining the axis of the inner joint member with respect to the axis of the outer joint member by an inclination lever, and incorporating one of the balls into one of the pockets of the cage, the one pocket being exposed on an opening end portion of the outer joint member; and pushing the cage by a cage pushing mechanism when the inclination of the axis of the inner joint member is reset by the inclination lever so as to subsequently incorporate another one of the balls into another one of the pockets of the cage. With the above-mentioned configuration, the automatic ball incorporation method for a constant velocity universal joint, which enables automatic incorporation of the balls regardless of a groove type of a constant velocity universal joint, such as a cross track groove type, or regardless of internal specifications of a Rzeppa type constant velocity universal joint or the like can be achieved.

Specifically, when the axis of the inner joint member is inclined with respect to the axis of the outer joint member by the inclination lever, the cage may be pushed by a cage raising lever. Thus, the inner joint member in a horizontal posture can be reliably inclined to thereby promote the automatic ball incorporation method.

It is desired that the cage pushing mechanism be configured to be driven by a drive source different from a drive source for the inclination lever. Thus, a forward end of a cage pushing lever of the cage pushing mechanism can be reliably regulated.

The cage pushing mechanism may be attached to the inclination lever, and may be configured to be driven by a drive source for the inclination lever. Thus, the cage pushing mechanism can be simplified and be formed at low cost.

The above-mentioned automatic ball incorporation method for a constant velocity universal joint is characterized in that: the constant velocity universal joint is of a cross track groove type; the track grooves of the outer joint member each comprise an arc-like portion having a ball raceway center line with a joint center (O) as a curvature center; a plane (M) containing the ball raceway center line and the joint center (O) is inclined with respect to an axis (N-N) of the joint and an inclination direction of the plane (M) is set so that track grooves adjacent to each other in a circumferential direction among the track grooves have the planes (M) inclined in opposite directions; and a ball raceway center line of each of the track grooves of the inner joint member is formed so as to be mirror-symmetrical to the ball raceway center line of the track groove of the outer joint member, which is paired with the track groove of the inner joint member, with respect to a plane (P) that contains the joint center (O) under a state in which an operating angle is 0°, and that is orthogonal to the axis (N-N) of the joint. Thus, an automatic ball incorporation method for a cross track groove type constant velocity universal joint with high efficiency can be achieved.

The above-mentioned automatic ball incorporation method for a constant velocity universal joint is characterized in that: each of the track grooves of the outer joint member of the constant velocity universal joint comprises a first track groove portion (7a) positioned on the inner side and a second track groove portion (7b) positioned on the opening side; the first track groove portion (7a) has an arc-like ball raceway center line (Xa) having the joint center (O) as a curvature center; a plane (M) containing at least a ball raceway center line (Xa) and the joint center (O) is inclined with respect to an axis (N-N) of the joint, and an inclination direction of the plane (M) is set so that first track groove portions (7a) adjacent to each other in a circumferential direction among the first track groove portions (7a) have the planes (M) inclined in opposite directions; when a ball raceway center line (Xb) of the second track groove portion (7b) is projected onto the plane (M), the ball raceway center line (Xb) has a linear portion and the linear portion is formed in an inclined manner so as to approach the axis (N-N) of the joint in a direction toward the opening side; an end portion (A) of the ball raceway center line (Xa) of the first track groove portion (7a) is positioned on a side closer to the opening than the joint center (O), and the ball raceway center line (Xb) of the second track groove portion (7b) is connected to the end portion (A); and a ball raceway center line (Y) of each of the track grooves of the inner joint member is formed so as to be mirror-symmetrical to the ball raceway center line (X) of the track groove of the outer joint member, which is paired with the track groove of the inner joint member, with respect to a plane (P) that contains the joint center (O) under a state in which an operating angle is 0°, and that is orthogonal to the axis (N-N) of the joint. Thus, an automatic ball incorporation method for a cross track groove type constant velocity universal joint with high efficiency and a high operating angle can be achieved.

The above-mentioned automatic ball incorporation method for a constant velocity universal joint is characterized in that a curvature center of each of the track grooves, which has an arc-like shape and extends in the axial direction, of the outer joint member, and a curvature center of each of the track grooves, which has an arc-like shape and extends in the axial direction, of the inner joint member are offset by the same distance to opposite sides in the axial direction with respect to the joint center. Thus, the automatic ball incorporation method for a lightweight and compact Rzeppa type constant velocity universal joint can be achieved.

### EFFECTS OF THE INVENTION

According to the present invention, the automatic ball incorporation method for a constant velocity universal joint, which enables automatic incorporation of balls regardless of a track groove type of a constant velocity universal joint, such as a cross track groove type, or regardless of internal specifications of a Rzeppa type constant velocity universal joint or the like, can be achieved.

### BRIEF DESCRIPTION OF DRAWINGS

FIG. 1A is a partial longitudinal sectional view of a constant velocity universal joint being a target of application of an automatic ball incorporation method for a constant velocity universal joint according to one embodiment of the present invention.
FIG. 1B is a right side view of the constant velocity universal joint of FIG. 1A.
FIG. 2A is a partial longitudinal sectional view of an outer joint member of the constant velocity universal joint of FIG. 1A.
FIG. 2B is a right side view of the outer joint member of FIG. 2A.
FIG. 3A is a left side view of an inner joint member of the constant velocity universal joint of FIG. 1A.
FIG. 3B is a view for illustrating an outer peripheral surface of the inner joint member of the constant velocity universal joint of FIG. 1A.
FIG. 3C is a right side view of the inner joint member of the constant velocity universal joint of FIG. 1A.
FIG. 4 is a partial longitudinal sectional view for illustrating details of a track groove of the outer joint member of FIG. 1A.
FIG. 5 is a longitudinal sectional view for illustrating details of a track groove of the inner joint member of FIG. 1A.
FIG. 6 is a side view for illustrating the entirety of a device, which is one example of a device configured to perform the automatic ball incorporation method for a constant velocity universal joint according to one embodiment of the present invention.
FIG. 7 is an enlarged plan view of the device illustrated in FIG. 6.
FIG. 8 is a sectional and front view taken along the line A-A of FIG. 7 when viewed from the direction of the arrows, for illustrating a cage pushing mechanism and a cage raising mechanism of the device illustrated in FIG. 6.
FIG. 9 is an enlarged view of a relevant part of an inclination lever mechanism, which is a right side view of FIG. 10.
FIG. 10 is an enlarged view of the relevant part of the inclination lever mechanism, which is a sectional view taken along the line B-B of FIG. 6 when viewed from the direction of the arrows.
FIG. 11 is a longitudinal sectional view for illustrating a relevant part of a chuck device of FIG. 6 in an enlarged manner.
FIG. 12 is a transverse sectional view taken along the line D-D of FIG. 11 when viewed from the direction of the arrows.
FIG. 13 is an enlarged view of a relevant part of the device under a state in which an inclination lever has been inserted in a spline hole of the inner joint member.
FIG. 14 is an enlarged view of a relevant part of the device under a state in which an inclining operation of the inclination lever has been completed and a ball is to be incorporated.
FIG. 15A is a flowchart for illustrating a related-art method for ball incorporation.
FIG. 15B is a flowchart for illustrating the automatic ball incorporation method according to this embodiment.
FIG. 16 is an enlarged plan view of an inner combination body for illustrating the order of incorporation of balls.
FIG. 17A is a plan view for illustrating a distal end jig for the cage pushing mechanism.
FIG. 17B is a perspective view for illustrating the distal end jig for the cage pushing mechanism.
FIG. 18 is an enlarged view of a relevant part for illustrating a modification example of the cage pushing mechanism.
FIG. 19A is a perspective view for illustrating a discovery made in a process of development of automatic ball incorporation, when viewed from a plan-view direction.
FIG. 19B is a perspective view for illustrating the discovery made in the process of development of the automatic ball incorporation, when viewed from a front-view direction.
FIG. 19C is a perspective view for illustrating the discovery made in the process of development of the automatic ball incorporation, when viewed from the plan-view direction.
FIG. 19D is a perspective view for illustrating the discovery made in the process of development of the automatic ball incorporation when viewed, from the front-view direction.
FIG. 20A is a partial longitudinal sectional view for illustrating a different type of a constant velocity universal joint being a target of application of the automatic ball incorporation method for a constant velocity universal joint according to this embodiment.
FIG. 20B is a transverse sectional view taken along the line C-C of FIG. 20A.

### Description of Embodiments

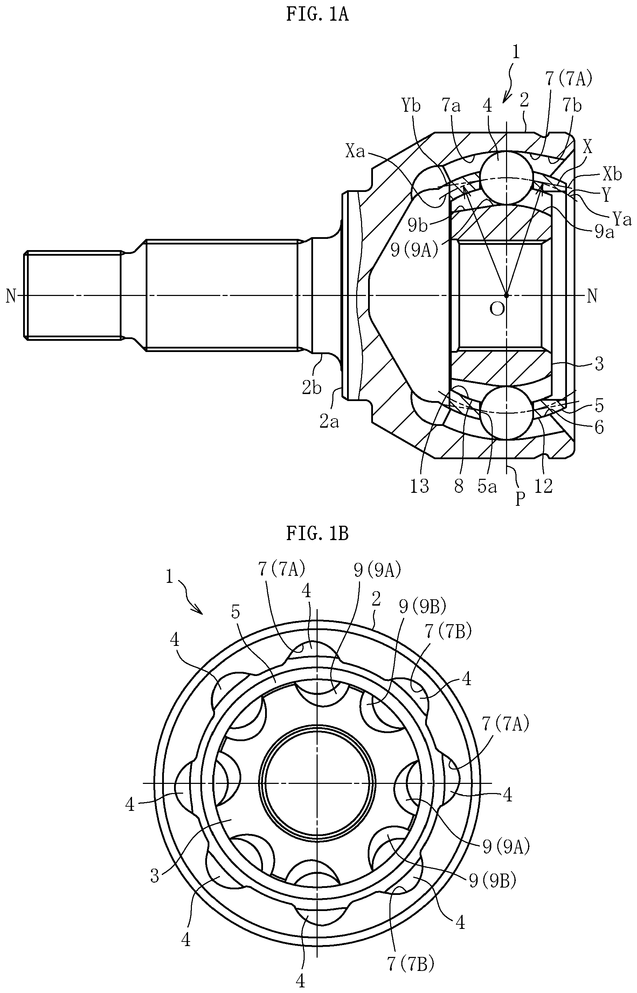

A constant velocity universal joint being a target of application of an automatic ball incorporation method for a constant velocity universal joint according to one embodiment of the present invention is described with reference to FIG. 1A to FIG. 5.

### <Configuration of Constant Velocity Universal Joint>

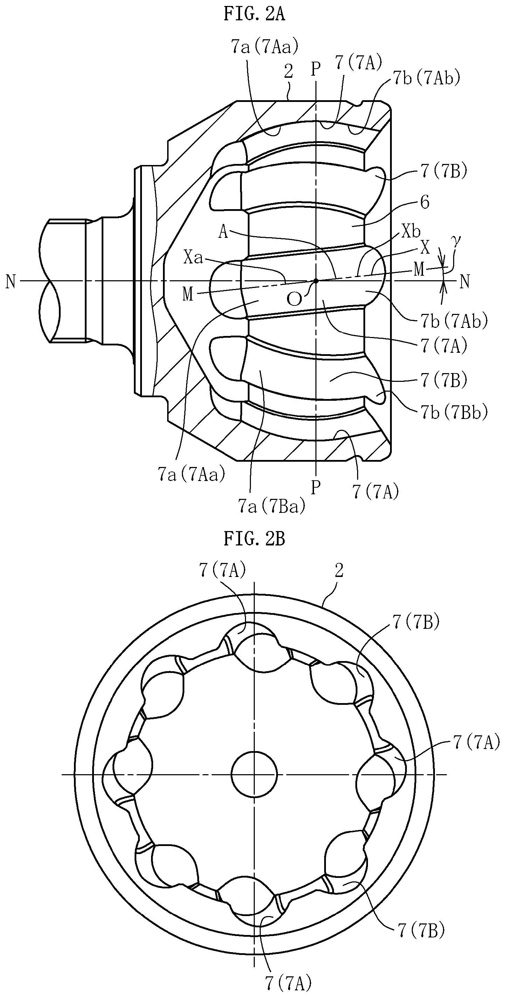

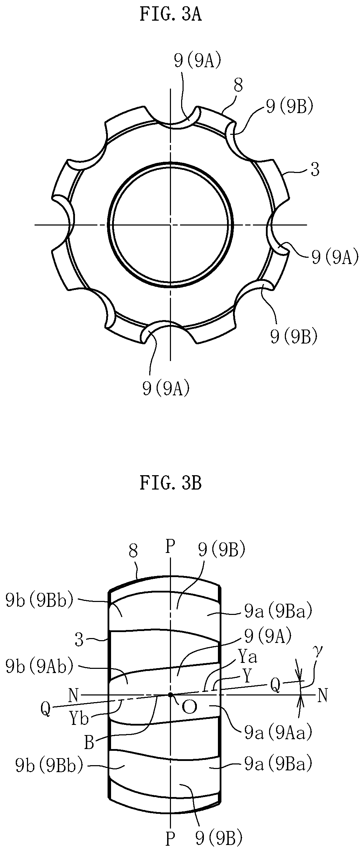

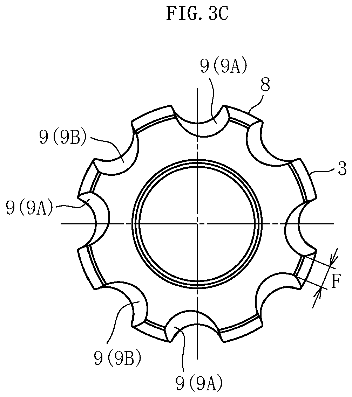

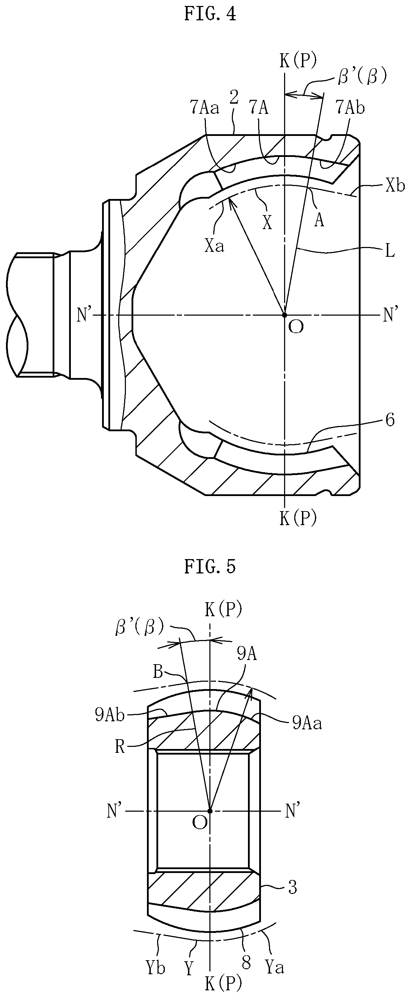

FIG. 1A to FIG. 5 are views for illustrating a constant velocity universal joint being a target of application of an automatic ball incorporation method for a constant velocity universal joint according to one embodiment of the present invention. FIG. 1A is a partial longitudinal sectional view of the constant velocity universal joint, and FIG. 1B is a right side view of the constant velocity universal joint. FIG. 2A is a partial longitudinal sectional view of an outer joint member of the constant velocity universal joint of FIG. 1A, and FIG. 2B is a right side view of the outer joint member of FIG. 2A. FIG. 3A is a left side view of an inner joint member of the constant velocity universal joint of FIG. 1A, and FIG. 3B is a view for illustrating an outer peripheral surface of the inner joint member of the constant velocity universal joint of FIG. 1A. FIG. 3C is a right side view of the inner joint member of the constant velocity universal joint of FIG. 1A. FIG. 4 is a partial longitudinal sectional view for illustrating details of a track groove of the outer joint member of FIG. 1A, and FIG. 5 is a longitudinal sectional view for illustrating details of a track groove of the inner joint member of FIG. 1A.

A constant velocity universal joint 1 is a fixed type constant velocity universal joint, and comprises an outer joint member 2, an inner joint member 3, balls 4, and a cage 5 as main components. As illustrated in FIG. 1B, FIG. 2A, FIG. 2B, FIG. 3A, FIG. 3B, and FIG. 3C, eight track grooves 7 of the outer joint member 2 and eight track grooves 9 of the inner joint member 3 are inclined in a circumferential direction with respect to an axis N-N of the joint, and are formed so that the track grooves 7A and 7B adjacent to each other in the circumferential direction and the track grooves 9A and 9B adjacent to each other in the circumferential direction are inclined in the directions opposite to each other. Eight balls 4 are arranged at intersecting portions between the track grooves 7A and 9A and between the track grooves 7B and 9B, which are paired between the outer joint member 2 and the inner joint member 3. Details of the track grooves 7 and 9 are described later.

A longitudinal cross section of the joint is illustrated in FIG. 1A. In order to precisely describe a form and a shape, such as an inclined state or a curved state of the track groove extending in an axial direction, description is made herein with use of the term "ball raceway center line". Here, the term "ball raceway center line" refers to a trajectory drawn by a center of a ball arranged in the track groove when the ball moves along the track groove. Thus, an inclined state of the track groove is the same as an inclined state of the ball raceway center line. Further, an arc-like or linear state of the track groove is the same as an arc-like or linear state of the ball raceway center line.

As illustrated in FIG. 1A, the track groove 7 of the outer joint member 2 has a ball raceway center line X. The track groove 7 comprises a first track groove portion 7a and a second track groove portion 7b. The first track groove portion 7a has an arc-like ball raceway center line Xa with a joint center O as a curvature center. The second track groove portion 7b has a linear ball raceway center line Xb. The ball raceway center line Xb of the second track groove portion 7b is smoothly connected as a tangent line to the ball raceway center line Xa of the first track groove portion 7a. The track groove 7 of the outer joint member 2 may comprise only an arc-like portion having the ball raceway center line Xa with the joint center O as a curvature center. Meanwhile, the track groove 9 of the inner joint member 3 has a ball raceway center line Y. The track groove 9 comprises a first track groove portion 9a and a second track groove portion 9b. The first track groove portion 9a has an arc-like ball raceway center line Ya with the joint center O as a curvature center. The second track groove portion 9b has a linear ball raceway center line Yb. The ball raceway center line Yb of the second track groove portion 9b is smoothly connected as a tangent line to the ball raceway center line Ya of the first track groove portion 9a. The track groove 9 of the inner joint member 3 may comprise only an arc-like portion having the ball raceway center line Ya with the joint center O as a curvature center.

A track groove depth can be made uniform and processing can be made easier by arranging the curvature centers of the ball raceway center lines Xa and Ya of the first track groove portions 7a and 9a on the joint center O lying on the axis N-N of the joint. The track grooves 7 and 9 are each formed to have an ellipsoidal or gothic-arch like transverse sectional shape. The track grooves 7 and 9 and the ball 4 are in so-called angular contact, that is, are in contact with each other at a contact angle (from about 30° to about 45°). Thus, the ball 4 is in contact with the track grooves 7 and 9 on their side surfaces, which are at a small distance from groove bottoms of the track grooves 7 and 9.

An inclined state of the track grooves 7 of the outer joint member 2 in the circumferential direction with respect to the axis N-N of the joint is described in detail with reference to FIG. 2A and FIG. 2B. The track grooves 7 of the outer joint member 2 are denoted as a track groove 7A and a track groove 7B based on a difference in inclination direction. As illustrated in FIG. 2A, a plane M containing the ball raceway center line X of the track groove 7A and the joint center O is inclined at an angle γ with respect to the axis N-N of the joint. Although not shown, regarding the track groove 7B, which is adjacent to the track groove 7A in the circumferential direction, the plane M containing the ball raceway center line X of the track groove 7B and the joint center O is inclined at the angle γ in a direction opposite to an inclination direction of the track groove 7A with respect to the axis N-N of the joint. Each of the track grooves 7A and 7B (and 9A and 9B described later) is inclined at the angle γ. However, the track grooves extend substantially in the axial direction. The phrase "track grooves extending in the axial direction" as used herein and in the claims refers to the concept encompassing track grooves inclined at the angle γ as described above.

Here, the reference symbols for the track grooves are supplementarily described. The track grooves of the outer joint member 2 are collectively denoted by the reference symbol "7". The track groove 7 comprises the first track groove portion denoted by the reference symbol 7a and the second track groove portion denoted by the reference symbol 7b. Further, the track grooves 7 inclined in different inclination directions are distinguished from each other by the reference symbols "7A" and "7B", and the first track groove portions of the track grooves inclined in the different directions are denoted by the reference symbols 7Aa and 7Bb, and the second track groove portions thereof are denoted by the reference symbols 7Ab and 7Bb. Reference symbols for track grooves of the inner joint member 3 described later are determined in the same manner.

Next, an inclined state of the track grooves 9 of the inner joint member 3 in the circumferential direction with respect to the axis N-N of the joint is described in detail with reference to FIG. 3A, FIG. 3B, and FIG. 3C. The track grooves 9 of the inner joint member 3 are denoted as a track groove 9A and a track groove 9B based on a difference in inclination direction. As illustrated in FIG. 3B, a plane Q containing the ball raceway center line Y of the track groove 9A and the joint center O is inclined at an angle γ with respect to the axis N-N of the joint. Although not shown, regarding the track groove 9B, which is adjacent to the track groove 9A in the circumferential direction, the plane Q containing the ball raceway center line Y of the track groove 9B and the joint center O is inclined at the angle γ in a direction opposite to an inclination direction of the track groove 9A with respect to the axis N-N of the joint. It is preferred that the inclination angle γ be set within a range of from 4° to 12° in consideration of operability of the constant velocity universal joint 1 and a spherical surface width F between the track grooves of the inner joint member 3 on the smallest distance side between the track grooves. The ball raceway center line Y of the track groove 9 of the inner joint member 3 is formed so as to be mirror-symmetrical to the ball raceway center line X of the track groove 7 of the outer joint member 2, which is paired with the track groove 9, with respect to a plane P that contains the joint center O under a state in which an operating angle is 0°, and that is orthogonal to the line N-N of the joint.

Details of the track groove as viewed in longitudinal cross section of the outer joint member 2 are described with reference to FIG. 4. A partial longitudinal cross section in FIG. 4 is a sectional view as viewed on the plane M containing the ball raceway center line X of the track groove 7A and the joint center O in FIG. 2A referred to above. Thus, precisely, FIG. 4 is not a longitudinal sectional view taken along the plane containing the axis N-N of the joint, but is a view for illustrating a cross section inclined at the angle γ. In FIG. 4, the track groove 7A of the outer joint member 2 is illustrated. The track groove 7B has the same configuration as that of the track groove 7A except only that the inclination direction is opposite to the inclination direction of the track groove 7A. Thus, description of the track groove 7B is omitted.

The track groove 7A is formed in a spherical inner peripheral surface 6 of the outer joint member 2 so as to extend in the axial direction. The track groove 7A has the ball raceway center line X. The track groove 7A comprises the first track groove portion 7Aa and the second track groove portion 7Ab. The first track groove portion 7Aa has an arc-like ball raceway center line Xa having the joint center O as a curvature center (without being offset in the axial direction). The second track groove portion 7Ab has a linear ball raceway center line Xb. The linear ball raceway center line Xb of the second track groove portion 7Ab is smoothy connected as a tangent line to an opening-side end portion A of the ball raceway center line Xa of the first track groove portion 7Aa. That is, the end portion A is a connection point between the first track groove portion 7Aa and the second track groove portion 7Ab. The end portion A is positioned closer to the opening than the joint center O. Thus, the linear ball raceway center line Xb of the second track groove portion 7Ab, which is connected as a tangent line to the end portion A of the ball raceway center line Xa of the first track groove portion 7Aa on the opening side, is formed so as to approach the axis N-N (see FIG. 1A) of the joint in a direction toward the opening. In this manner, an effective track length at a maximum operating angle can be ensured, and a wedge angle can be prevented from becoming excessively large.

As illustrated in FIG. 4, a straight line that connects the end portion A and the joint center O to each other is represented by L. An axis N'-N' of the joint, which is projected on the plane M (see FIG. 2A) containing the ball raceway center line X of the track groove 7A and the joint center O is inclined at y with respect to the axis N-N of the joint. An angle formed by a perpendicular K passing through the joint center O on the axis N'-N' and the straight line L is represented by β'. The above-mentioned perpendicular K lies on the plane P that contains the joint center O under a state in which the operating angle is 0°, and that is orthogonal to the axis N-N of the joint. Thus, an angle β formed by the straight line L with respect to the plane P that contains the joint center O under a state in which the operating angle is 0°, and that is orthogonal to the axis N-N of the joint has a relationship of sinβ=sinβ'×cosγ.

Similarly, details of the track groove as viewed in longitudinal cross section of the inner joint member 3 are described with reference to FIG. 5. A longitudinal cross section in FIG. 5 is a sectional view as viewed on the plane Q containing the ball raceway center line Y of the track groove 9A and the joint center O in FIG. 3B referred to above. Thus, similarly to FIG. 4, FIG. 5 is not a longitudinal sectional view taken along the plane containing the axis N-N of the joint, but is a view for illustrating a cross section inclined at the angle γ. In FIG. 5, the track groove 9A of the inner joint member 3 is illustrated. The track groove 9B has the same configuration as that of the track groove 9A except only that the inclination direction is opposite to the inclination direction of the track groove 9A. Thus, description of the track groove 9B is omitted.

The track groove 9A is formed in a spherical inner peripheral surface 8 of the inner joint member 3 so as to extend in the axial direction. The track groove 9A has the ball raceway center line Y. The track groove 9A comprises a first track groove portion 9Aa and a second track groove portion 9Ab. The first track groove portion 9Aa has an arc-like ball raceway center line Ya having the joint center O as a curvature center (without being offset in the axial direction). The second track groove portion 9Ab has a linear ball raceway center line Yb. The ball raceway center line Yb of the second track groove portion 9Ab is smoothy connected as a tangent line to an inner-side end portion B of the ball raceway center line Ya of the first track groove portion 9Aa. That is, the end portion B is a connection point between the first track groove portion 9Aa and the second track groove portion 9Ab. The end portion B is positioned closer to the inner side than the joint center O. Thus, the linear ball raceway center line Yb of the second track groove portion 9Ab, which is connected as a tangent line to the end portion B of the ball raceway center line Ya of the first track groove portion 9Aa on the inner side, is formed so as to approach the axis N-N (see FIG. 3A) of the joint in a direction toward the inner side. In this manner, an effective track length at a maximum operating angle can be ensured, and a wedge angle can be prevented from becoming excessively large.

As illustrated in FIG. 5, a straight line that connects the end portion B and the joint center O to each other is represented by R. An axis N'-N' of the joint, which is projected on the plane Q (see FIG. 3B) containing the ball raceway center line Y of the track groove 9A and the joint center O is inclined at y with respect to the axis N-N of the joint. An angle formed by a perpendicular K passing through the joint center O on the axis N'-N' and the straight line R is represented by β'. The above-mentioned perpendicular K lies on the plane P that contains the joint center O under a state in which the operating angle is 0°, and that is orthogonal to the axis N-N of the joint. Thus, an angle β formed by the straight line R with respect to the plane P that contains the joint center O under a state in which the operating angle is 0°, and that is orthogonal to the axis N-N of the joint has a relationship of sinβ=sinβ'×cosγ.

Next, the angle β formed by each of the straight lines L and R with respect to the plane P that contains the joint center O under a state in which the operating angle is 0°, and that is orthogonal to the axis N-N of the joint is described. When an operating angle θ is taken, the ball 4 is moved by θ/2 with respect to the plane P that contains the joint center O of the outer joint member 2 and the inner joint member 3 and that is orthogonal to the axis N-N of the joint. The angle β is determined from 1/2 of a frequently used operating angle, and a range of the track groove with which the ball 4 is in contact when the operating angle falls within the range of the frequently used operating angle. Here, the term "frequently used operating angle" is defined. First, the term "normal operating angle" of the joint refers to an operating angle generated in a fixed type constant velocity universal joint for a front drive shaft when steering is set to a straight traveling state in an automobile with one passenger, which travels on a horizontal flat road surface. The normal operating angle is generally selected and determined within a range of from 2° to 15° in accordance with design conditions for each vehicle model.

The term "frequently used operating angle" refers not to a high operating angle generated when, for example, the above-mentioned automobile turns right or left at an intersection, but to an operating angle generated in a fixed type constant velocity universal joint when the automobile is continuously traveling on a curved roadway or the like. The frequently used operating angle is also determined in accordance with design conditions for each vehicle model. The frequently used operating angle is determined to be 20° at a maximum. Thus, the angle β formed by each of the straight lines L and R with respect to the plane P that contains the joint center O under a state in which the operating angle is 0°, and that is orthogonal to the axis N-N is set to fall within the range of from 3° to 10°. However, the angle β is not limited to fall within the range of from 3° to 10°, and can be appropriately set in accordance with design conditions for each vehicle model. The constant velocity universal joint can be generally used for various vehicle models by setting the angle β within the range of from 3° to 10°.

With the above-mentioned angle β, in FIG. 4, the end portion A of the ball raceway center line Xa of the first track groove portion 7Aa corresponds to a center position of the ball when the ball is moved in the axial direction to be closest to the opening at the frequently used operating angle. Similarly, in FIG. 5, in the inner joint member 3, the end portion B of the ball raceway center line Ya of the first track groove portion 9Aa corresponds to the center position of the ball when the ball is moved in the axial direction to the innermost side at the frequently used operating angle. Because of the setting described above, the balls 4 are positioned between the first track groove portions 7Aa and 9Aa of the outer joint member 2 and the inner joint member 3 and between the track groove portions 7Ba and 9Ba (see FIG. 2A and FIG. 3B) that are inclined in the opposite direction to the first track groove portions. Thus, forces in the opposite directions are exerted from the balls 4 on the pocket portions 5a of the cage 5, which are adjacent to each other in the circumferential direction. As a result, the cage 5 is stabilized at a position of the joint center O (see FIG. 1A). Thus, a contact force between a spherical outer peripheral surface 12 of the cage 5 and the spherical inner peripheral surface 6 of the outer joint member 2 and a contact force between a spherical inner peripheral surface 13 of the cage 5 and the spherical outer peripheral surface 8 of the inner joint member 3 are suppressed. Accordingly, the joint is smoothly operated under a high load or at the time of high-speed rotation. As a result, torque loss or heat generation are reduced to thereby improve durability.

The general description of the constant velocity universal joint 1 is as given above. Next, an automatic ball incorporation method for a constant velocity joint member according to this embodiment is described based on one example of a device configured to perform the automatic ball incorporation method. The device configured to perform the automatic ball incorporation method is merely an example and is not limited to that mentioned above. The automatic ball incorporation method can be carried out in various modes without departing from the gist of the automatic ball incorporation method for a constant velocity universal joint of the present invention.

### <Entirety and Main Configuration of Device configured to perform Automatic Ball Incorporation Method>

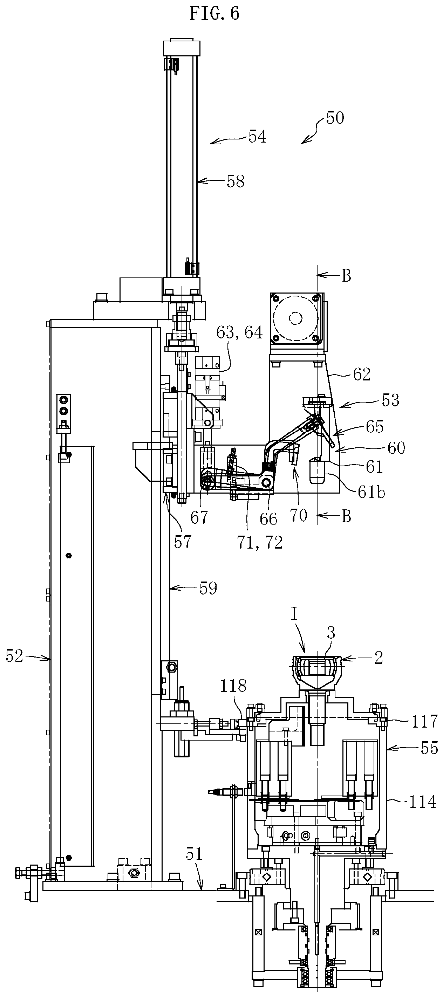

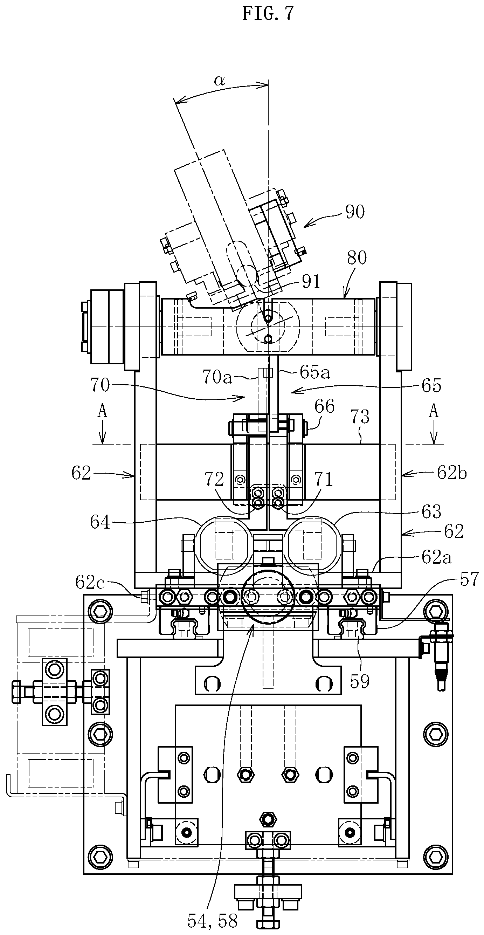

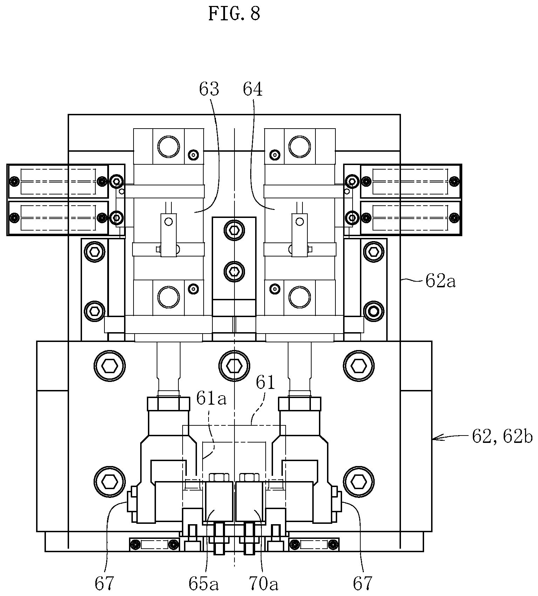

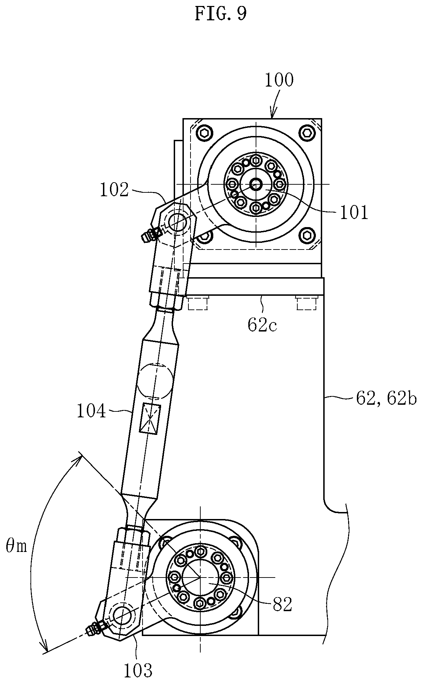

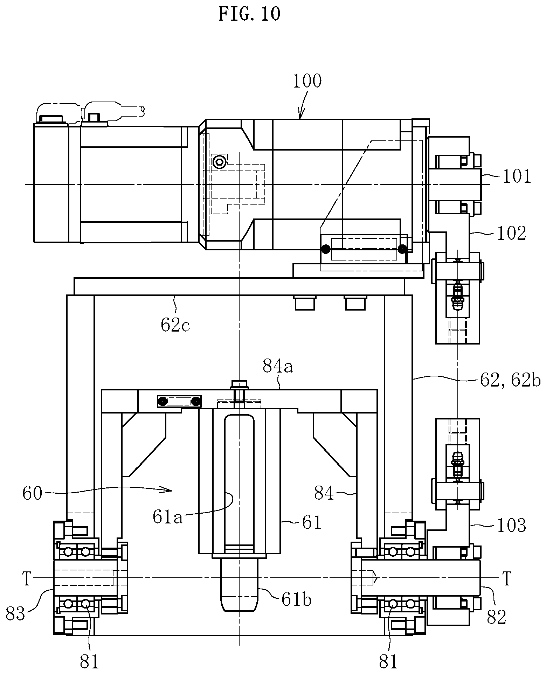

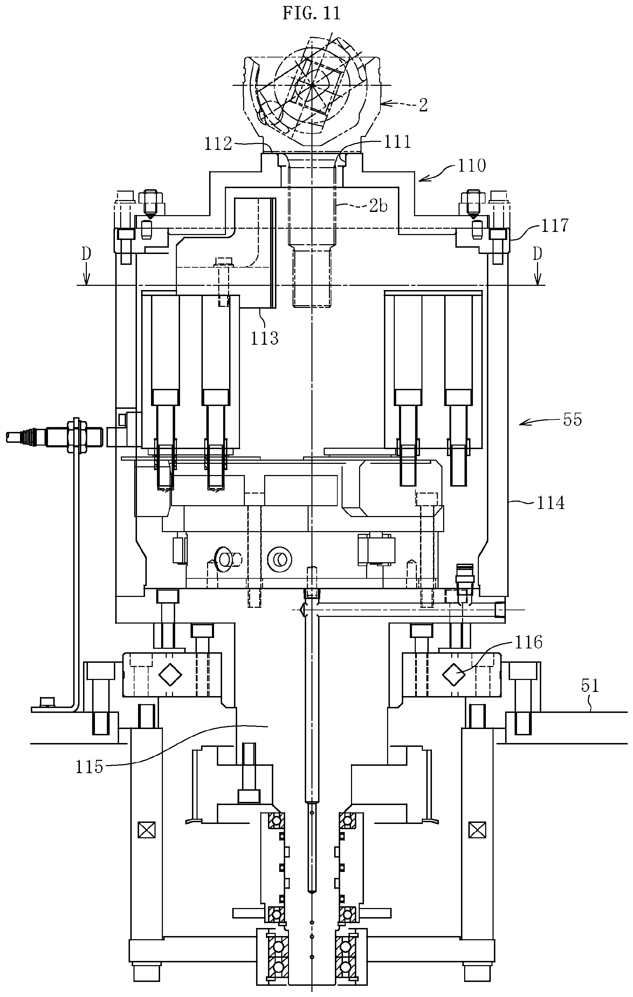

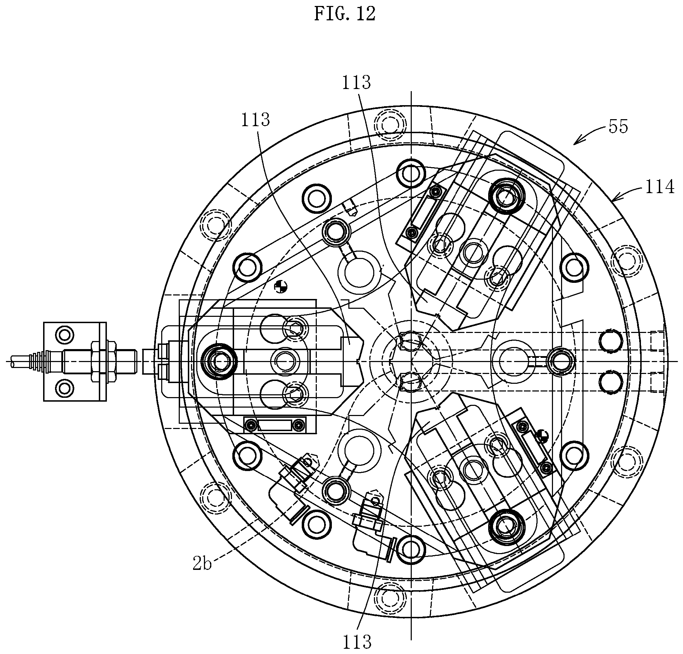

The entirety and main configuration of one example of the device configured to perform the automatic ball incorporation method are illustrated in FIG. 6 to FIG. 12. FIG. 6 is a side view for illustrating one example of the entirety of the device configured to perform the automatic ball incorporation method for a constant velocity universal joint according to one embodiment of the present invention, and FIG. 7 is an enlarged plan view of the device. FIG. 8 is a sectional and front view taken along the line A-A of FIG. 7 when viewed from the direction of the arrows, for illustrating a cage pushing mechanism and a cage raising mechanism of the device. FIG. 9 is an enlarged view of a relevant part of an inclination lever mechanism, and is a right side view of FIG. 10. FIG. 10 is an enlarged view of the relevant part of the inclination lever mechanism, and is a sectional view taken along the line B-B of FIG. 6 when viewed from the direction of the arrows. FIG. 11 is a longitudinal sectional view for illustrating a relevant part of a chuck device of FIG. 6 in an enlarged manner, and FIG. 12 is a transverse sectional view taken along the line D-D of FIG. 11 when viewed from the direction of the arrows.

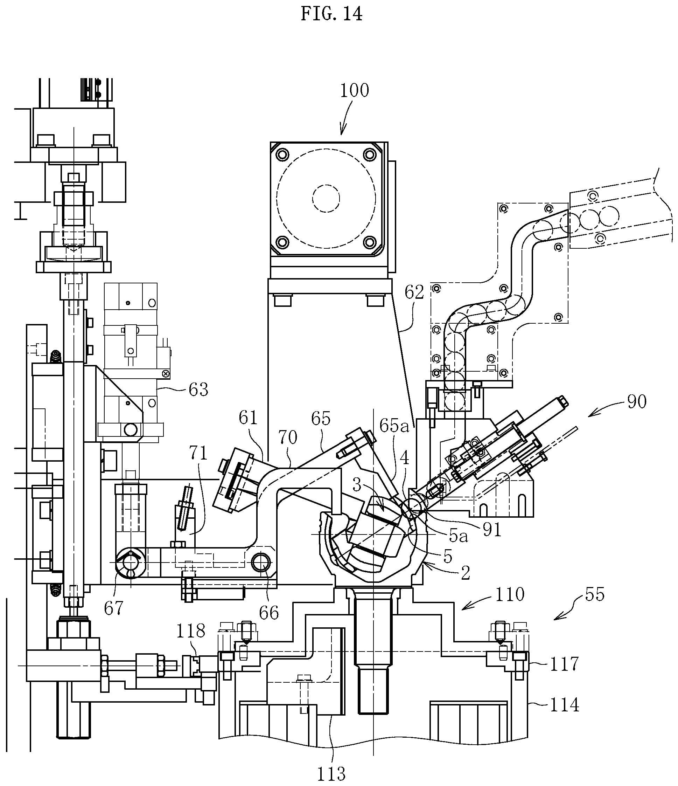

As illustrated in FIG. 6, a device 50 configured to perform the automatic ball incorporation method comprises: a support base portion 51; a main frame portion 52; an inclining operation unit 53 for the inner combination body I comprising the inner joint member and the cage; a vertical-movement operation unit 54 configured to vertically move the inclining operation unit 53 for the inner combination body I; a chuck device 55 for the outer joint member 2; and a ball supply unit 90 (see FIG. 7 and FIG. 14) as main components. The inclining operation unit 53 for the inner combination body I is provided so as to be slidable by liner guide devices 57 and rails 59. The vertical-movement operation unit 54 is operated for vertical movement by a linear-motion device 58 (for example, an air cylinder).

The chuck device 55 for the outer joint member 2 is provided on the support base portion 51. The chuck device 55 is indexed in a rotating direction by a predetermined phase angle corresponding to a track groove into which the ball 4 is to be incorporated. An axis of the chuck device 55 matches an axis of an inclination lever mechanism 60 of the inclining operation unit 53 for the inner combination body I. Thus, a distal end shaft portion 61b of an inclination lever 61 can be inserted into a spline hole of the inner joint member 3 of the inner combination body I incorporated inside the outer joint member 2 under a state in which the inclination lever 61 of the inclination lever mechanism 60 is not inclined.

The inclining operation unit 53 for the inner combination body I comprises the inclination lever mechanism 60, a cage pushing mechanism 65, and a cage raising mechanism 70. As illustrated in FIG. 6 and FIG. 7, a frame 62 of the inclining operation unit 53 for the inner combination body I is formed in a substantially U-like shape when viewed from a plan-view direction. The linear guide devices 57 are mounted to side plate portions 62a through intermediation of a support base plate 62c, and the frame 62 is slidable along the rails 59. Linear-motion devices 63 and 64 (for example, air cylinders) are mounted onto the side plate portions 62a of the frame 62, and operate the cage pushing mechanism 65 and the cage raising mechanism 70. Here, the phrase "the cage pushing mechanism is configured to be driven by a drive source different from a drive source for the inclination lever" as described in the claims shall include the above-mentioned meaning.

A connecting plate 73 is provided between a pair of upright plate portions 62b of the frame 62. A pivot shaft 66 is provided above the connecting plate 73. The pivot shaft 66 serves as a rocking fulcrum for each of a cage pushing lever 65a of the cage pushing mechanism 65 and a cage raising lever 70a of the cage raising mechanism 70. A base end portion of the cage pushing lever 65a and a base end portion of the cage raising lever 70a are coupled to the linear-motion devices 63 and 64 through intermediation of a link mechanism 67 (see FIG. 6). Pulling operations of the linear-motion devices 63 and 64 cause rightward (clockwise) rotation of the cage pushing lever 65a and the cage raising lever 70a, respectively. A forward end of the cage pushing lever 65a and a forward end of the cage raising lever 70a are regulated by stoppers 71 and 72, respectively. Thus, the forward end of the cage pushing lever 65a of the cage pushing mechanism 65 and the forward end of the cage raising lever 70a of the cage raising mechanism 70 can be reliably regulated.

In the automatic ball incorporation method for a constant velocity universal joint and the device configured to perform the incorporation method according to this embodiment, the method and the device each using both of the cage pushing mechanism 65 and the cage raising mechanism 70 have been exemplified. However, while the cage pushing mechanism 65 is an essential mechanism, the cage raising mechanism 70 may be omitted depending on a case.

The inclination lever mechanism 60 is provided on a distal end side (upper end side in FIG. 7) of the pair of upright plate portions 62b of the frame 62. On the upper end side in FIG. 7, a coupling shaft portion 80 of the inclination lever mechanism 60 is illustrated. The ball supply unit 90 is arranged in an inclined state (at an inclination angle α of 22.5°) with respect to the coupling shaft portion 80 so as to be opposed thereto.

Now, the reason why the ball supply unit 90 is arranged in an inclined state so as to be opposed to the coupling shaft portion 80 is supplementarily described below. The constant velocity universal joint 1, for which the automatic ball incorporation method for a constant velocity universal joint and the device configured to perform the incorporation method according to this embodiment are used, has the following configuration as described above. That is, eight track grooves 7 of the outer joint member 2 and eight track grooves 9 of the inner joint member 3 are formed as the track grooves 7A, 7B, 9A, and 9B, each being inclined in the circumferential direction with respect to the axis N-N of the joint, so that the inclination directions of the track grooves 7A and 7B adjacent to each other in the circumferential direction are opposite to each other and the inclination directions of the track grooves 9A and 9B adjacent to each other in the circumferential direction are opposite to each other. Eight balls 4 are arranged at the intersecting portions between the track grooves 7A and 9A and the track grooves 7B and 9B, which are paired between the outer joint member 2 and the inner joint member 3. In consideration of such ball incorporation work for the eight balls 4 to the intersecting portions at the phase angles, the ball supply unit 90 is arranged in an inclined state at α of 22.5° so as to be opposed to the coupling shaft portion. Meanwhile, in a case of a Rzeppa type constant velocity universal joint described later, the track grooves of the inner joint member and the track grooves of the outer joint member are not inclined in the circumferential direction, and the plane containing the ball raceway center line of the track groove and the joint center extends in the same direction as the direction of the axis of the joint. Thus, the ball supply unit is arranged so as to be opposed to the coupling shaft portion without being inclined (α=0°).

As illustrated in FIG. 8, which is a view taken along the line A-A of FIG. 7 when viewed from the direction of the arrows, two linear-motion devices 63 and 64 are provided to the side plate portions 62a of the frame 62 of the inclining operation unit 53 for the inner combination body I. One linear-motion device 63 is coupled to the cage pushing lever 65a through intermediation of the link mechanism 67, and another linear-motion device 64 is coupled to the cage raising lever 70a through intermediation of the link mechanism 67. Further, the cage pushing lever 65a and the cage raising lever 70a are accommodated in an opening portion 61a of the inclination lever 61 to thereby avoid interference.

In FIG. 10, which is a sectional view taken along the line B-B of FIG. 6 when viewed from the direction of the arrows, a relevant part of the inclination lever mechanism 60 is illustrated in an enlarged manner. Rocking shafts 82 and 83 are rotatably supported by lower parts of the pair of upright plate portions 62b of the frame 62 through intermediation of rolling bearings 81, respectively. Although the coupling shaft portion 80 is provided between the pair of rocking shafts 82 and 83 as illustrated in FIG. 7, the illustration thereof is omitted in FIG. 10. A rocking frame 84 having a gate-like shape is provided on the rocking shafts 82 and 83. The inclination lever 61 is provided to an upper plate portion 84a of the rocking frame 84. The above-mentioned opening portion 61a is formed in the inclination lever 61.

An upper plate portion 62c is provided between the pair of upright plate portions 62b of the frame 62. A pivot device 100 (for example, an air cylinder) is provided on the upper plate portion 62c. An arm member 102 is mounted to an output shaft 101 of the pivot device 100. An arm member 103 is mounted also to the rocking shaft 82. As illustrated in FIG. 9, the arm member 102 that is mounted to the output shaft 101 of the pivot device 100 and the arm member 103 that is mounted to the rocking shaft 82 are connected to each other by a connecting member 104. Thus, the rocking shaft 82 rocks at a predetermined angle (ball incorporation angle θm, for example, about 72°), and the inclination lever 61 provided to the rocking frame 84 rocks about a central position (the line T-T of FIG. 10) of the distal end shaft portion 61b. The central position of the distal end shaft portion 61b is a position in the axial direction, which serves as the joint center O (see FIG. 3B) of the inner joint member 3. Thus, an operation of inclining the inner combination body I at the ball incorporation angle θm and an operation of returning the inner combination body I to a horizontal posture, which are described later, are enabled.

The chuck device 55 for the outer joint member 2 is described with reference to FIG. 11 and FIG. 12. FIG. 11 is a longitudinal sectional view for illustrating a relevant part of the chuck device 55 of FIG. 6 in an enlarged manner, and FIG. 12 is a transverse sectional view taken along the line D-D of FIG. 11 when viewed from the direction of the arrows. The chuck device 55 is provided on the support base portion 51. An installation base 110 is provided on a top of a substantially cylindrical portion 114 of the chuck device 55. The installation base 110 comprises: a guide hole 111 for a stem shaft portion 2b of the outer joint member 2; and a reference surface 112. A back face of the outer joint member 2 abuts against the reference surface 112. A gripping portion 113 of a chuck is formed below the installation base 110. The gripping portion 113 is formed of, for example, a three-claw chuck. The gripping portion 113 is moved forward to a position indicated by a two-dot chain line, to clamp and fix the stem shaft portion 2b of the outer joint member 2 installed on the installation base 110.

A main shaft portion 115 is provided to the substantially cylindrical portion 114, and is supported turnably by a rolling bearing 116. The chuck device 55 can be indexed by appropriately rotationally driving the main shaft portion 115 with power (for example, by a timing belt). Thus, a rotation phase of a supply port 91 (see FIG. 7 and FIG. 14) of the ball supply unit 90 can be matched with the track groove 7 of the outer joint member 2. As illustrated in FIG. 6, a cam follower 118 is brought into abutment against and guided by a guide portion 117 provided to an upper part of the substantially cylindrical portion 114 of the chuck device 55, to thereby suppress runout of the chuck device 55.

The entirety and the main configuration of one example of the device configured to perform the automatic ball incorporation method for a constant velocity universal joint according to this embodiment have been described above. Next, a ball incorporation operation in the automatic ball incorporation method for a constant velocity universal joint according to this embodiment is described together with the above-mentioned one example of the device configured to perform the automatic ball incorporation method.

### <Ball Incorporation Operation of Device configured to perform Automatic Ball Incorporation Method>

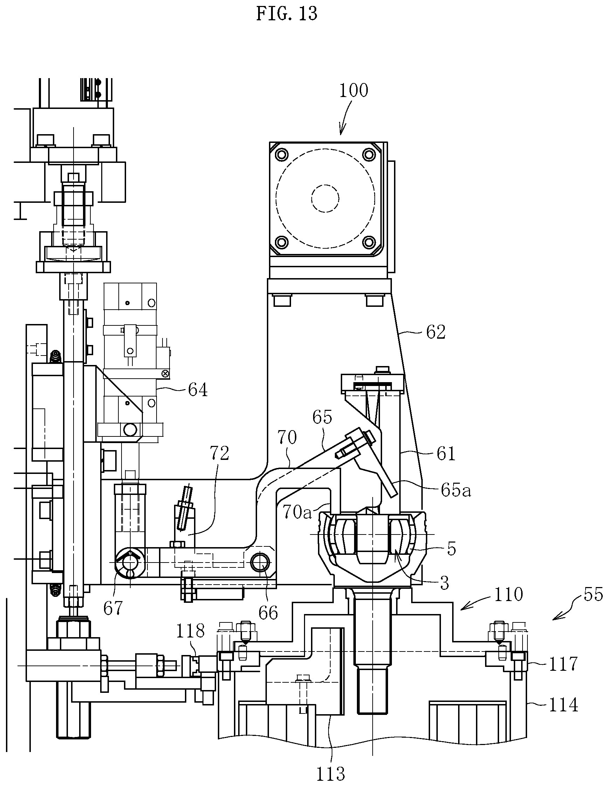

As illustrated in FIG. 6, the inclining operation unit 53 for the inner combination body I is moved upward and is retreated to the upper-side end. Under this state, the inclination lever 61 is not inclined, and is in a vertical posture. The outer joint member 2 is placed onto the chuck device 55. After that, the gripping portion 113 is moved forward to clamp and fix the stem shaft portion 2b of the outer joint member 2. The inner combination body I is incorporated in a horizontal posture inside an inner peripheral portion of the outer joint member 2, and an axis of the outer joint member 2 and an axis of the inner combination body I are matched with each other. After the outer joint member 2 is clamped by and fixed to the chuck device 55, the inclining operation unit 53 is moved downward from a state illustrated in FIG. 6. As a result, the distal end shaft portion 61b of the inclination lever 61 is inserted into the spline hole of the inner joint member 3 of the inner combination body I. This state is illustrated in FIG. 13. FIG. 13 is an enlarged view of a relevant part of the device under a state in which the inclination lever 61 has been inserted in the spline hole of the inner joint member 3.

After that, the inclination lever 61 performs an inclining operation. Simultaneously with the inclining operation, a distal end of the cage raising lever 70a pushes an end portion of the cage 5 to thereby perform the inclining operation on the inner joint member 3 and the cage 5 of the inner combination body I. When the cage raising lever 70a pushes the end portion of the cage 5 at the beginning of the movement of the inclination lever 61, the inclining operation on the inner joint member 3 and the cage 5 can be smoothly performed. The forward end of the cage raising lever 70a, which is moved by a pulling operation of the linear-motion device 64, is regulated by the stopper 72.

As illustrated in FIG. 14, the inner joint member 3 is inclined up to the ball incorporation angle θm with respect to the outer joint member 2, to thereby expose the pocket 5a of the cage 5 from an opening end portion of the outer joint member 2. In this manner, the inclining operation of the inclination lever 61 is completed. FIG. 14 is an enlarged view of a relevant part of the device, for illustrating a state in which the ball is to be incorporated after the completion of the inclining operation of the inclination lever 61. One ball 4 is supplied from the supply port 91 of the ball supply unit 90 to the pocket 5a of the cage 5, which is exposed from the opening end portion of the outer joint member 2, and the ball 4 is incorporated into the pocket 5a. This ball 4 is regarded as a first ball 4. A setup adjustment is first performed on the ball supply unit 90 in accordance with a model number of the constant velocity universal joint, and the ball supply unit 90 is installed at a position of FIG. 14. That is, although the ball supply unit 90 is installed in FIG. 6, FIG. 11, FIG. 13, and the like, illustration thereof is omitted.

After that, the inclination lever 61 performs a return operation. As illustrated in FIG. 14, simultaneously with the return operation of the inclination lever 61, the distal end of the cage pushing lever 65a pushes the end portion of the cage 5 to perform the return operation on the inner joint member 3 and the cage 5 of the inner combination body I. When the end portion of the cage 5 is pushed at the beginning of the movement of the inclination lever 61, the ball 4 is moved into the track groove 7 of the outer joint member 2. As a result, the problem of biting of the ball 4 into the track groove 7 is eliminated. Thus, the return operation on the inner joint member 3 and the cage 5 can be smoothly performed. The forward end of the cage pushing lever 65a, which is moved by a pulling operation of the linear-motion device 63, is regulated by the stopper 71. After the inner combination body I is returned to the horizontal state, the chuck device 55 is indexed so as to incorporate a next ball 4.

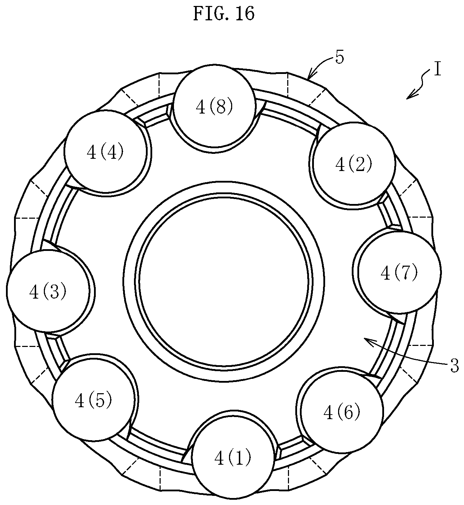

The order of incorporation of the balls into the inner combination body I is specifically described with reference to FIG. 16. The above-mentioned first ball is denoted by the reference symbol 4(1). A rotation phase of the ball 4(1) is defined as 0°. Rotation phases of second ball 4(2) to eighth ball 4(8) in the righthand (clockwise) direction order based on the rotation phase of 0° of the ball 4(1) as a reference are 225° for the second ball 4(2), 90° for the third ball 4(3), 135° for the fourth ball 4(4), 45° for the fifth ball 4(5), 315° for the sixth ball 4(6), 270° for the seventh ball 4(7), and 180° for the eighth ball 4(8). The balls 4 are smoothly incorporated by setting the order of incorporation and the rotation phases of the balls 4 as described above.

After the incorporation of the first ball 4(1), the chuck device 55 is indexed by the rotation phase of 225°. The inclining operation for the inner combination body I, the incorporation of the ball 4(2), and the return operation are performed. Then, the inclining operation for the inner combination body I, the incorporation of the ball 4, and the return operation are repeated in order to thereby complete the incorporation of the balls up to the eighth ball 4(8). In this manner, an automatic ball incorporation step is completed.

The above-mentioned order of incorporation of the balls 4 is merely one example, and the order of incorporation and the rotation phases of the balls 4 can be appropriately changed. Further, the inner combination body I may be incorporated inside the inner periphery of the outer joint member 2 under a state in which one reference ball has been incorporated in advance into the inner combination body I with a pocket clearance between the pocket 5a of the cage 5 and the ball 4 being set as a slight interference margin. Subsequently, the remaining balls may be incorporated in order.

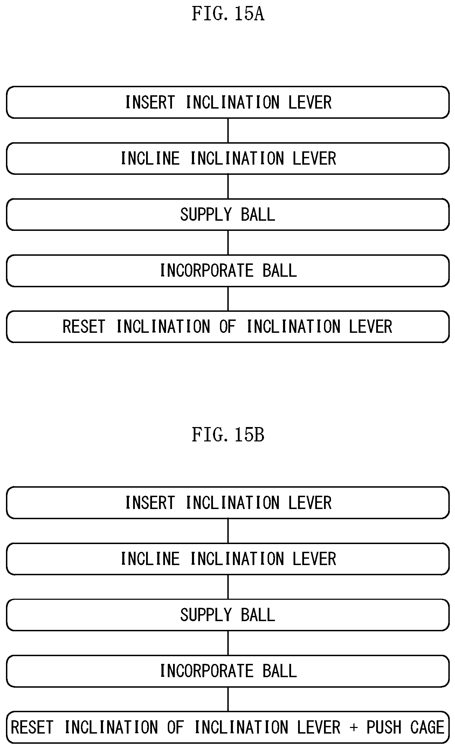

Step flows are illustrated in FIG. 15A and FIG. 15B in a summarized manner for comparison between the automatic ball incorporation method according to this embodiment and a related-art method. FIG. 15A shows the related-art method, and FIG. 15B shows the automatic ball incorporation method according to this embodiment. In the automatic ball incorporation method according to this embodiment, simultaneously with the return operation of the inclination lever, the cage pushing lever pushes the end portion of the cage to perform the return operation on the inner joint member and the cage of the inner combination body. The ball is moved into the track groove of the outer joint member, resulting in that the problem of biting of the ball into the track groove is eliminated. Thus, the return operation on the inner joint member and the cage can be smoothly performed.

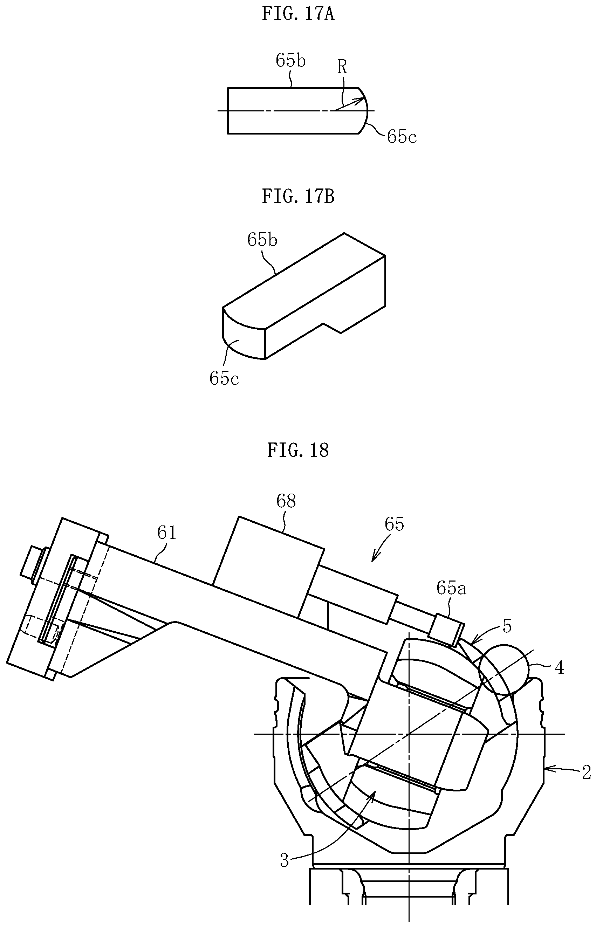

In FIG. 17A and FIG. 17B, a distal end jig 65b for the cage pushing mechanism 65 is illustrated. FIG. 17A is a plan view, and FIG. 17B is a perspective view. A contact surface 65c of the distal end jig 65b for the cage pushing mechanism 65, which is to be brought into contact with the cage 5, is formed in a smooth arc-like shape having a curvature radius R. The curvature radius R is appropriately set within a range of from about 20 mm to about 50 mm. Further, the contact surface 65c is surface-hardened by induction hardening or the like. Thus, the generation of, for example, a flaw in the end surface of the cage 5 is suppressed, and thus satisfactory abrasion resistance is provided.

### <Modification Example of Cage Pushing Mechanism>

In FIG. 18, a modification example of the cage pushing mechanism 65 is illustrated. FIG. 18 is an enlarged view of a relevant part of this modification example in which the cage pushing mechanism 65 is attached to the inclination lever 61. A buffer device 68 is mounted on the inclination lever 61 so that the cage pushing mechanism 65 is added thereto. The above-mentioned inclination lever 61 of this embodiment is driven by the linear-motion device that is separately provided. In this modification example, however, a drive device is not provided separately. Thus, the cage pushing mechanism can be simplified and be formed at low cost. The other configurations and actions of the inclination lever 61 and the cage pushing mechanism 65 are the same as those of the above-mentioned inclination lever mechanism 60 and cage pushing mechanism 65 of this embodiment. Parts and portions having the same functions are denoted by the same reference symbols, and only essential points are described.

The cage pushing mechanism 65 of this modification example is provided to the inclination lever 61. The cage pushing mechanism 65 comprises the buffer device 68 and the cage pushing lever 65a. The buffer device 68 is mounted on the inclination lever 61, and the cage pushing lever 65a is in abutment against the end portion of the cage 5. The cage pushing lever 65a is operated integrally with the inclination lever 61 through intermediation of the buffer device 68. Here, the phrase "the cage pushing mechanism is attached to the inclination lever, and is configured to be driven by a drive source for the inclination lever" shall include the above-mentioned meaning.

### <Configuration of Constant Velocity Universal Joint of Different Type being Target of Application of Automatic Ball Incorporation Method>

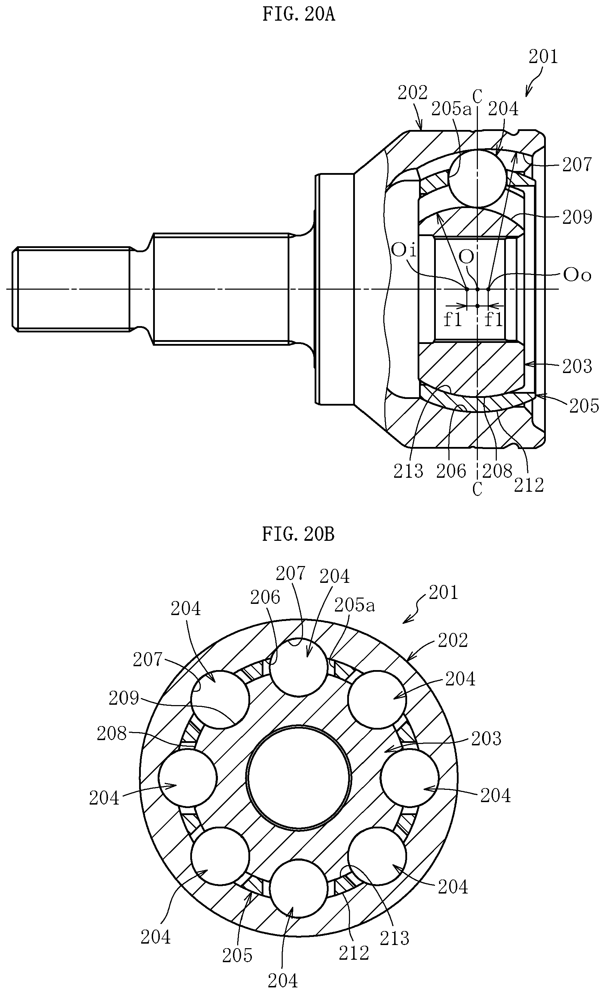

A constant velocity universal joint of different type, which is a target of application of the automatic ball incorporation method according to this embodiment, is described with reference to FIGS. 20. FIG. 20A is a partial longitudinal sectional view, and FIG. 20B is a transverse sectional view taken along the line C-C of FIG. 20A.

As illustrated in FIG. 20A and FIG. 20B, a Rzeppa type constant velocity universal joint 201 comprises an outer joint member 202, an inner joint member 203, balls 204, and a cage 205 as main components. Eight arc-like track grooves 207 extending in the axial direction are formed in a spherical inner peripheral surface 206 of the outer joint member 202, and the outer joint member 202 has an opening side and an inner side, which are spaced apart from each other in the axial direction. Eight arc-like track grooves 209 extending in the axial direction are formed in a spherical outer peripheral surface 208 of the inner joint member 203. Eight balls 204 configured to transmit torque are incorporated between the track grooves 207 of the outer joint member 202 and the track grooves 209 of the inner joint member 203, which correspond to the track grooves 207, on a one-to-one basis. The cage 205 has pockets 205a into which the balls 204 are allowed to be accommodated, and has a spherical outer peripheral surface 212 and a spherical inner peripheral surface 213 which are in sliding contact with the spherical inner peripheral surface 206 of the outer joint member 202 and the spherical outer peripheral surface 208 of the inner joint member 203, respectively.

A curvature center of the spherical inner peripheral surface 206 of the outer joint member 202 and a curvature center of the spherical outer peripheral surface 208 of the inner joint member 203 both lie at a joint center O. Meanwhile, a curvature center Oo of the track groove 207 of the outer joint member 202 and a curvature center Oi of the track groove 209 of the inner joint member 203 are offset to the opposite sides in the axial direction by the same distance f1 with respect to the joint center O. Thus, when the joint takes an operating angle, the balls 204 are always guided on a plane that bisects an angle formed by an axis of the outer joint member 202 and an axis of the inner joint member 203, and rotational torque is transmitted at a constant velocity between the two axes.

The above-mentioned Rzeppa type constant velocity universal joint 201 has internal specifications including, for example, a track offset amount f1 reduced in order to achieve reduction in weight and size. Automatic ball incorporation is enabled by pushing the cage with use of the cage pushing mechanism simultaneously with the resetting of the inclination of the axis of the inner joint member with use of the inclination lever. The description given above about the above-mentioned automatic ball incorporation method for a constant velocity universal joint according to one embodiment, the entirety and the main configurations of one example of the device configured to perform the incorporation method, the ball incorporation operation, the order of incorporation of the balls into the inner combination body I is the same for the Rzeppa type constant velocity universal joint 201, and thus is used for the description of the Rzeppa type constant velocity universal joint.

In the embodiment described above, the constant velocity universal joint comprising eight balls has been exemplified. However, the constant velocity universal joint may appropriately comprise six to ten or more balls.

The present invention is not limited to the above-mentioned embodiments. As a matter of course, the present invention may be carried out in various modes without departing from the gist of the present invention. The scope of the present invention is defined in claims, and encompasses equivalents described in claims and all changes within the scope of claims.

### DESCRIPTION REFERENCE SIGNS

- 1, 201: constant velocity universal joint
- 2, 202: outer joint member
- 3, 203: inner joint member
- 4, 204: ball
- 5, 205: cage
- 5a, 205a: pocket
- 6, 206: spherical inner peripheral surface
- 7, 207: track groove
- 7a: first track groove portion
- 7b: second track groove portion
- 8, 208: spherical outer peripheral surface
- 9, 209: track groove
- 9a: first track groove portion
- 9b: second track groove portion
- 12, 212: spherical outer peripheral surface
- 13, 213: spherical inner peripheral surface
- M: plane containing ball raceway center line
- N: axis of joint
- O: joint center
- Oo: curvature center
- Oi: curvature center
- P: plane
- X: ball raceway center line
- Xa: ball raceway center line
- Xb: ball raceway center line
- Y: ball raceway center line
- Ya: ball raceway center line
- Yb: ball raceway center line

## Claims

1. An automatic ball incorporation method for a constant velocity universal joint, the constant velocity universal joint comprising:
an outer joint member having a spherical inner peripheral surface in which a plurality of track grooves extending in an axial direction are formed, the outer joint member having an opening side and an inner side that are spaced apart from each other in the axial direction;
an inner joint member having a spherical outer peripheral surface in which a plurality of track grooves extending in the axial direction are formed;
a plurality of balls configured to transmit torque and arranged between the track grooves of the outer joint member and the corresponding track grooves of the inner joint member; and
a cage having pockets configured to accommodate the balls, the cage having a spherical outer peripheral surface and a spherical inner peripheral surface that are allowed to be in sliding contact with the spherical inner peripheral surface of the outer joint member and the spherical outer peripheral surface of the inner joint member, respectively, the automatic ball incorporation method comprising:
fitting an inner combination body, which is formed by fitting the spherical outer peripheral surface of the inner joint member to the spherical inner peripheral surface of the cage, to the spherical inner peripheral surface of the outer joint member, and arranging the cage, the inner joint member, and the outer joint member under a state in which axes of the cage, the inner joint member, and the outer joint member are substantially matched with each other;
inclining the axis of the inner joint member with respect to the axis of the outer joint member by an inclination lever, and incorporating one of the balls into one of the pockets of the cage, the one pocket being exposed on an opening end portion of the outer joint member; and
pushing the cage by a cage pushing mechanism when the inclination of the axis of the inner joint member is reset by the inclination lever so as to subsequently incorporate another one of the balls into another one of the pockets of the cage.

2. The automatic ball incorporation method for a constant velocity universal joint according to claim 1, wherein, when the axis of the inner joint member is inclined with respect to the axis of the outer joint member by the inclination lever, the cage is pushed by a cage raising lever.

3. The automatic ball incorporation method for a constant velocity universal joint according to claim 1 or 2, wherein the cage pushing mechanism is configured to be driven by a drive source different from a drive source for the inclination lever.

4. The automatic ball incorporation method for a constant velocity universal joint according to claim 1 or 2, wherein the cage pushing mechanism is attached to the inclination lever, and is configured to be driven by a drive source for the inclination lever.

5. The automatic ball incorporation method for a constant velocity universal joint according to any one of claims 1 to 4,
wherein the constant velocity universal joint is of a cross track groove type,
wherein the track grooves of the outer joint member each comprise an arc-like portion having a ball raceway center line with a joint center (O) as a curvature center,
wherein a plane (M) containing the ball raceway center line and the joint center (O) is inclined with respect to an axis (N-N) of the joint, and an inclination direction of the plane (M) is set so that track grooves adjacent to each other in a circumferential direction among the track grooves have the planes (M) inclined in opposite directions, and
wherein a ball raceway center line of each of the track grooves of the inner joint member is formed so as to be mirror-symmetrical to the ball raceway center line of the track groove of the outer joint member, which is paired with the track groove of the inner joint member, with respect to a plane (P) that contains the joint center (O) under a state in which an operating angle is 0°, and that is orthogonal to the axis (N-N) of the joint.

6. The automatic ball incorporation method for a constant velocity universal joint according to any one of claims 1 to 5,
wherein each of the track grooves of the outer joint member of the constant velocity universal joint comprises a first track groove portion (7a) positioned on the inner side, and a second track groove portion (7b) positioned on the opening side,
wherein the first track groove portion (7a) has an arc-like ball raceway center line (Xa) having the joint center (O) as a curvature center,
wherein a plane (M) containing at least a ball raceway center line (Xa) and the joint center (O) is inclined with respect to an axis (N-N) of the joint, and an inclination direction of the plane (M) is set so that first track groove portions (7a) adjacent to each other in a circumferential direction among the first track groove portions (7a) have the planes (M) inclined in opposite directions,
wherein, when a ball raceway center line (Xb) of the second track groove portion (7b) is projected onto the plane (M), the ball raceway center line (Xb) has a linear portion, and the linear portion is formed in an inclined manner so as to approach the axis (N-N) of the joint in a direction toward the opening side,
wherein an end portion (A) of the ball raceway center line (Xa) of the first track groove portion (7a) is positioned on a side closer to the opening than the joint center (O), and the ball raceway center line (Xb) of the second track groove portion (7b) is connected to the end portion (A), and
wherein a ball raceway center line (Y) of each of the track grooves of the inner joint member is formed so as to be mirror-symmetrical to the ball raceway center line (X) of the track groove of the outer joint member, which is paired with the track groove of the inner joint member, with respect to a plane (P) that contains the joint center (O) under a state in which an operating angle is 0°, and that is orthogonal to the axis (N-N) of the joint.

7. The automatic ball incorporation method for a constant velocity universal joint according to any one of claims 1 to 4, wherein a curvature center of each of the track grooves, which has an arc-like shape and extends in the axial direction, of the outer joint member, and a curvature center of each of the track grooves, which has an arc-like shape and extends in the axial direction, of the inner joint member are offset by the same distance to opposite sides in the axial direction with respect to the joint center.
